# EUROPEAN PATENT SPECIFICATION

(11) **EP 0 803 180 B1**
(45) Date of publication and mention of the grant of the patent: **13.08.2003**
(21) Application number: 96929549.2
(22) Date of filing: 06.09.1996
(51) Int. Cl.: A01D 34/74, A01D 34/68

(54) **DRIVING DEVICE FOR A WALKING MACHINE**
ANTRIEBSVORRICHTUNG FÜR ANGETRIEBENE MASCHINE
DISPOSITIF D'ENTRAINEMENT POUR MACHINE AUTOTRACTEE

(30) Priority: 12.09.1995 JP 23361295
(43) Date of publication of application: 29.10.1997
(73) Proprietor: HONDA GIKEN KOGYO KABUSHIKI KAISHA, Minato-ku, Tokyo 107 (JP)
(72) Inventor: KUTSUKAKE, Mitsuhiro K.K. Honda Gijutsu Kenkyusho, Wako-shi, Saitama-ken 351-01 (JP); SATOU, Kazunobu K.K. Honda Gijutsu Kenkyusho, Wako-shi, Saitama-ken 351-01 (JP)
(74) Representative: Giles, Ashley Simon
(86) International application number: JP9602544
(87) International publication number: WO97009871

(56) References cited:
- GB-A- 1 141 011
- JP-A- 6 225 615
- JP-Y- 4 018 346
- JP-Y- 5 006 736
- JP-Y- 62 001 871
- PATENT ABSTRACTS OF JAPAN vol. 016, no. 544 (C-1004), 13 November 1992 (1992-11-13) & JP 04 207108 A (ISEKI & CO LTD), 29 July 1992 (1992-07-29)
- PATENT ABSTRACTS OF JAPAN vol. 017, no. 001 (C-1014), 5 January 1993 (1993-01-05) & JP 04 237421 A (ISEKI & CO LTD), 25 August 1992 (1992-08-25)
- PATENT ABSTRACTS OF JAPAN vol. 016, no. 001 (C-0899), 7 January 1992 (1992-01-07) & JP 03 228612 A (ISEKI & CO LTD), 9 October 1991 (1991-10-09)

## Description

### FIELD OF THE INVENTION

The present invention relates to an improvement in a system for driving a walking-type working machine such as a walking-type lawn mower, the system including a height regulating device.

### BACKGROUND ART

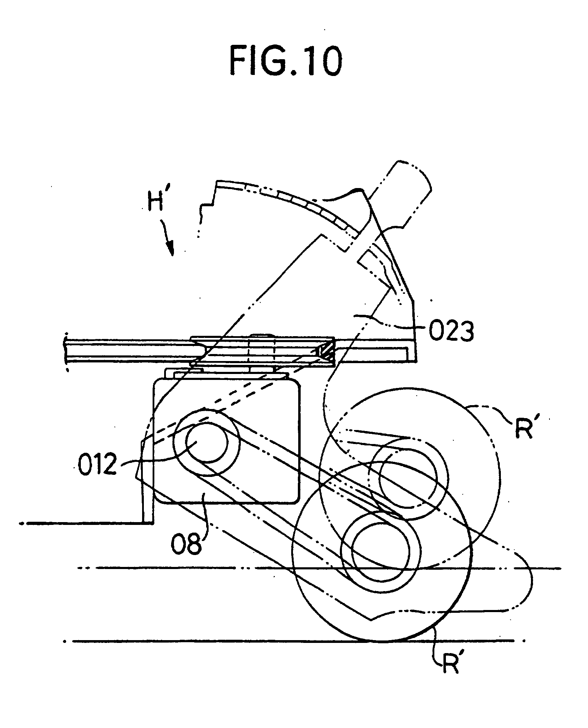

In the conventional walking-type working machine such as a walking-type lawn mower, as shown in Fig. 10, a transmission 08 having a clutch operatively associated with a prime mover is mounted on a rear portion of a cutter housing H', and a rear roller R' is disposed at a distance from the rear of the transmission 08. The transmission 08 and the rear roller R' are interconnected through an endless transmitting mechanism, so that the rear roller R' is rotated by the prime mover through the transmission 08. The rear roller R' is carried at a rear end of a height regulating arm 23 which is swingably supported coaxially with a transmission output shaft 012 of the transmission 08, so that the lifting and lowering of the rear roller R' are controlled by regulating the swinging movement of the height regulating arm 023.

The system for driving such conventional walking-type working machine suffers from the following problems:
(1) Since the rear roller is mounted at a distance from the rear of the transmission, the size and weight of the cutter housing itself are caused to be increased, bringing about an increase in cost.
(2) The wheel base is lengthened, resulting in an increased turning radius to reduce the working area, and the pushing load of the working machine is increased, resulting in a heavy lifting/lowering operation of a handle.
(3) Since the output shaft of the transmission and the height regulating shaft are coaxial with each other, the degree of freedom in selecting the place for mounting of the transmission is decreased.

Japanese publication No 4-207108 discloses a lawn mower having an engine 5, a roller drive shaft 20, a transmission shaft 21 and rollers 11L, 11R. Transmission case 18 houses elements for transmitting power from engine 5 through the shafts to the rollers. No transmission belt is shown. No spring is shown for biasing the transmission about a transmission shaft.

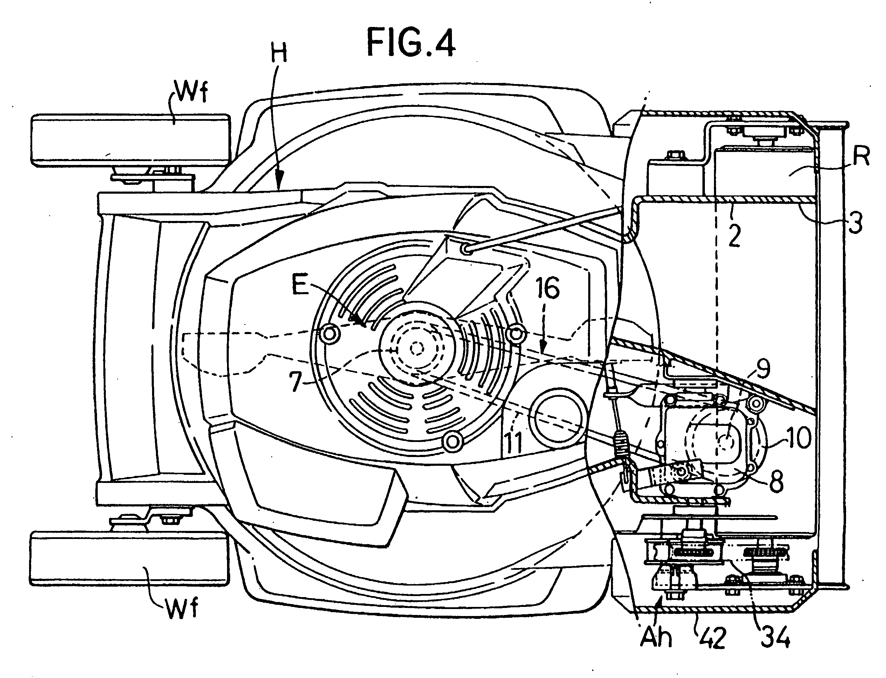

Japanese publication No 4-237421 describes a lawn mower having an engine 3, a reduction mechanism 21 within a transmission case 20 (Fig 4), and rollers 12 which are driven by the engine through reduction mechanism 21. There are shown no transmission belt nor spring for biasing the transmission about a transmission shaft.

Japanese publication No 3-228612 describes a lawn mower having rollers 2. Power take-off shaft 9, input shaft 11, gears 13a, 13b, transmission shaft 12 and a transmission mechanism 3 in a transmission case 4 are shown for driving the rollers 2. Apparently no belt or its associated spring are shown there.

### DISCLOSURE OF THE INVENTION

The present invention seeks to provide a novel system for driving a walking-type working machine, wherein the above-described problems can be addressed.

According to the present invention, there is provided a system for driving a walking-type working machine as claimed in claim 1.

With these features of the present invention, it is possible to reduce the size and weight of the cutter housing to provide an inexpensive driving system. In addition, it is possible to provide a small sharp turn to considerably increase the working area, and further to reduce the rear rolling member pushing-up load.

Preferably, the system further includes a height regulating shaft provided on said cutter housing at a distance spaced apart from said transmission, and a height regulating arm swingably supported on said height regulating shaft, said rear rolling member being rotatably carried on said height regulating arm, so that said rear rolling member can be lifted and lowered by controlling the swinging movement of the height regulating arm.

With this preferred feature of the present invention, it is possible to enhance the degree of freedom of disposition of the transmission on the cutter housing.

### BRIEF DESCRIPTION OF THE DRAWINGS

Fig.1 is a side view of the entire arrangement of a walking-type lawn mower including a system according to the present invention;
Fig.2 is a plan view of the entire arrangement of the walking-type lawn mower;
Fig.3 is an enlarged side view of a portion of the lawn mower;
Fig.4 is a partially broken-away plan view taken along a line 4-4 in Fig.3;
Fig.5 is an enlarged partially sectional view taken along a line 5-5 in Fig.3;
Fig.6 is a vertical sectional view taken along a line 6-6 in Fig.5;
Fig.7 is a partially vertical sectional view taken along a line 7-7 in Fig.5, when the lawn mower is in a higher position;
Fig.8 is a partially vertical sectional view taken along a line 7-7 in Fig.5, when the lawn mower is in a lower position;
Fig.9 is a partially sectional view taken along a line 9-9 in Fig.5; and
Fig.10 is a side view of a rear rolling member driving section of the conventional walking-type lawn mower.

### BEST MODE FOR CARRYING OUT THE INVENTION

The mode of the present invention as being applied to a walking-type lawn mower will now be described by way of an embodiment with reference to the accompanying drawings.

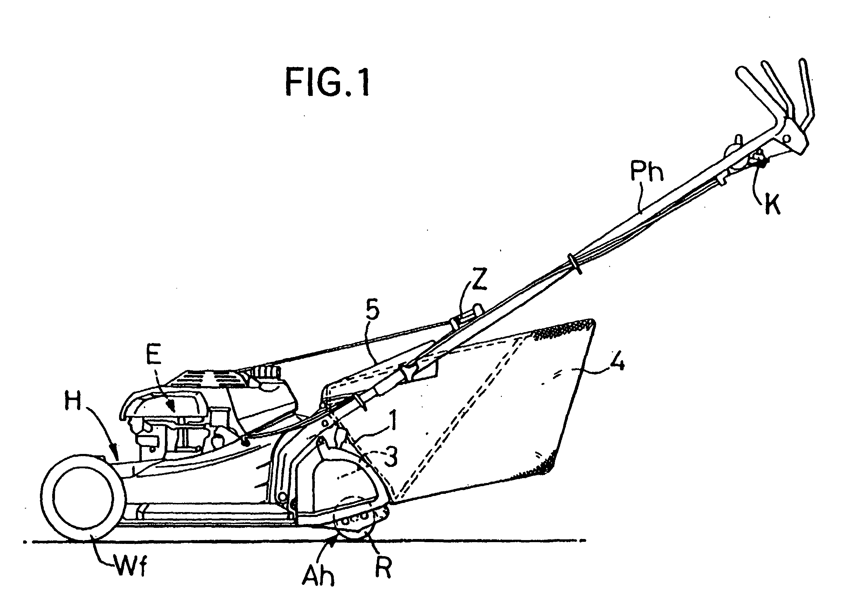

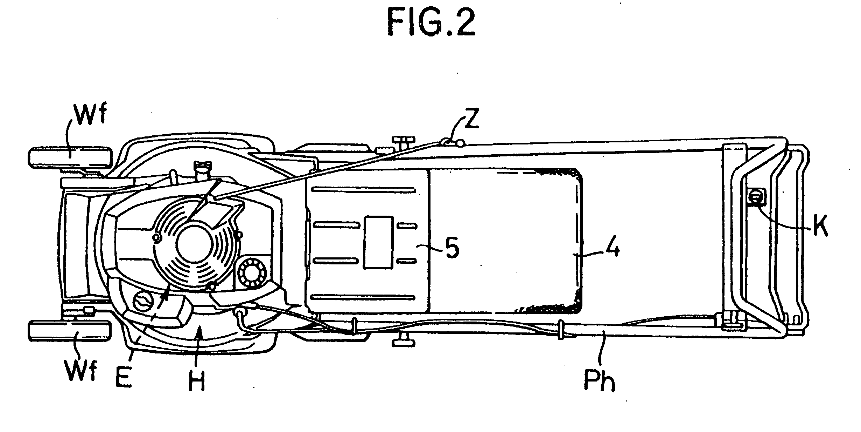

Referring to Figs.1 to 4, the walking-type lawn mower includes a cutter housing H with its lower surface opened. A pair of left and right front wheels Wf, Wf are suspended laterally in a front portion of the cutter housing H. The front wheels Wf, Wf are liftable and lowerable in a regulatable manner with respect to the cutter housing H by a conventionally known height regulating mechanism. A rear roller R as a rear rolling member rotated by a driving device which will be described hereinafter, is supported for regulatable lifting and lowering movements at a rear portion of the cutter housing H. A prime mover, i.e., a vertical-type engine E is mounted on the cutter housing H and has a vertical output shaft 6 which extends vertically within the cutter housing H, and a lawn mowing cutter C is connected to the vertical-type engine E. Supporting structures for the engine E, the cutter C and the cutter housing H are conventionally known and hence, the detailed description of them is omitted.

A handle post Ph for operating the lawn mower is mounted to the rear portion of the cutter housing H to extend obliquely upwards, and a steering device for steering the lawn mower is mounted on the handle post Ph. Reference character K is a key switch, and reference character Z is a recoiled starter.

A substantially flat rear deck surface 1 is formed on the rear portion of the cutter housing H and inclined downwards from a position above the rear roller R in a rearward direction. A lawn releasing outlet 3 of a lawn releasing passage 2 defined in the cutter housing H opens into laterally one side (a right side in an advancing direction of the lawn mower) of the rear deck surface 1, so that lawn cut-down by the cutter C is passed through the lawn release passage 2 and released from the lawn release outlet 3, as usual. A battery mounting surface for detachably mounting a battery serving as a power source for an electric device such as starter motor of the engine E is formed on the other side (a left side in the advancing direction of the lawn mower) of the rear deck surface 1 in parallel to the lawn release outlet 3. A grass bag 4 is upward-openably and closably and detachably mounted to the rear deck surface 1 to cover the lawn release outlet 3, so that the lawn released from the lawn release outlet 3 is accommodated into the grass bag 4. A rear discharger cover 5 is vertically openably and closably carried on an upper edge of the rear portion of the cutter housing H to hold an upper surface of a front portion of the grass bag 4. The rear discharger cover 5 is used as a lawn guide/release passage by rotating it to a closed position and retaining it at the closed position after removing the grass bag 4.

The rear roller R can be rotated by the driving system (which will be described hereinafter) including the engine E, and lifted and lowered with respect to the cutter housing H by the height regulating mechanism which will be described hereinafter, thereby regulating the height of the cutter C to regulate the lawn mowing height.

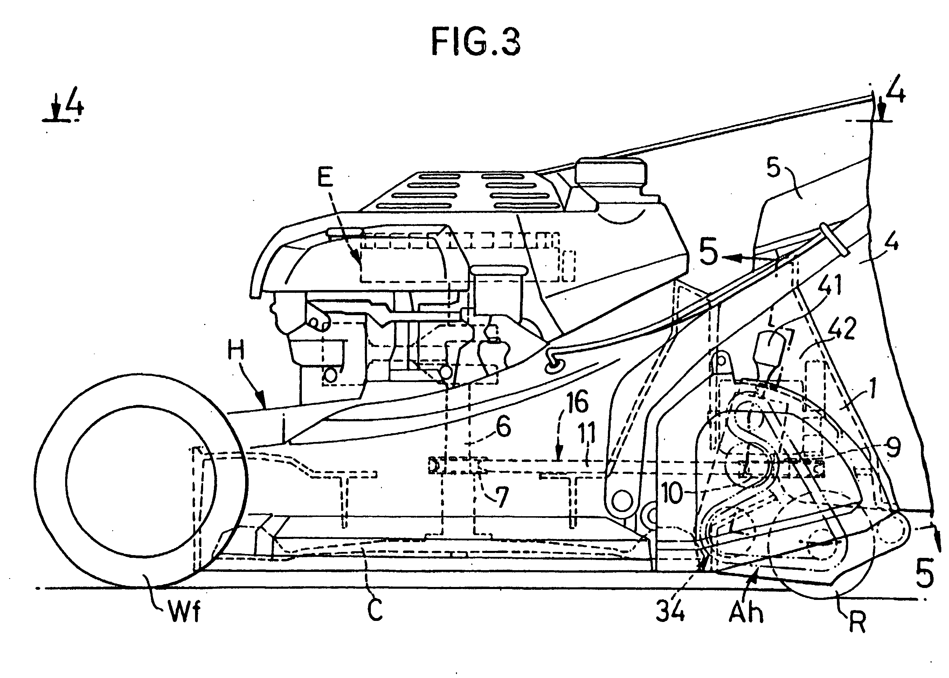

Referring to Figs.3 to 9, a driving pulley 7 is secured to the output shaft 6 of the engine E, while a driven pulley 10 is secured to a transmission input shaft 9 which depends downward from a transmission 8 supported in the rear portion of the cutter housing H. A transmitting belt 11 extending substantially horizontally is reeved around the pulleys 7 and 10. The driving pulley 7, the driven pulley 10 and the transmitting belt 11 constitute a belt transmitting mechanism 16 and thus, a driving power from the engine E is transmitted through the belt transmitting mechanism 16 to the transmission input shaft 9 of the transmission 8.

The transmission 8 is disposed in a dead space defined in the rear portion of the cutter housing H, and the transmission input shaft 9, which contains a cone clutch therein and connected to the engine E, depends vertically. The transmission input shaft 9 is oil-tightly sealed to a mission case 8₁ by a seal means and thus constructed so that a lubricating oil or the like is prevented from being leaked, even if the transmission input shaft 9 depends downwards from the transmission case 8₁.

The transmission 8 is supported in the cutter housing H above the rear roller R in a manner which will described in detail hereinafter. The own weight of transmission 8 acts on the rear roller R to increase the driving force of the rear roller R.

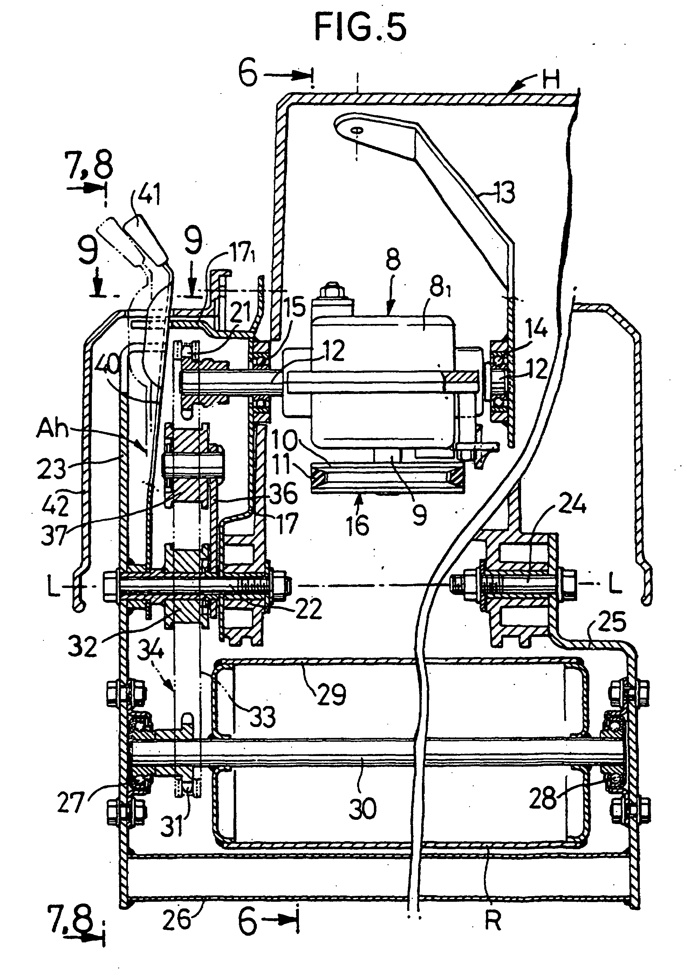

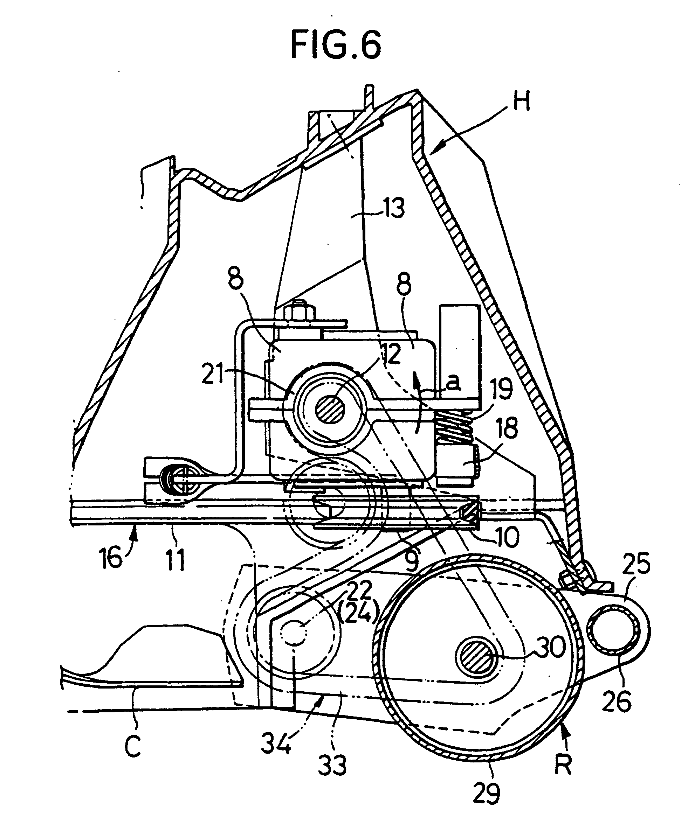

As shown in Fig.5, a transmission output shaft 12 extending laterally from the transmission case 8₁ is rotatably supported integrally at its inner end on a transmission holder 13 integrally supported to the cutter housing H in a hung manner through a ball bearing 14. The transmission output shaft 12 is also rotatably supported at its outer end through a ball bearing 15 in a height regulating panel 17 fixed to the cutter housing 1. Further, as clearly shown in Fig.6, the transmission case 8₁ of the transmission 8 is resiliently supported at its one side (rear side)on a bracket 18 integral with the cutter housing H with a support spring comprised of a compression coil spring interposed therebetween. Thus, the transmission 8 is resiliently supported on the cutter housing H for vertically swinging movement about the transmission output shaft 12, so that a resilient force of the support spring 19 biases the transmission 8 to swing it upwards as shown by an arrow a in Fig.6, thereby applying a tension of the transmitting belt 11.

As clearly shown in Fig.5, an outer end of the mission output shaft 12 of the transmission 8 protrudes through a sidewall surface of the cutter housing H to the outside of such sidewall surface, and a driving sprocket 21 is secured to a free end of the transmission output shaft 12 and operatively associated with the rear roller R.

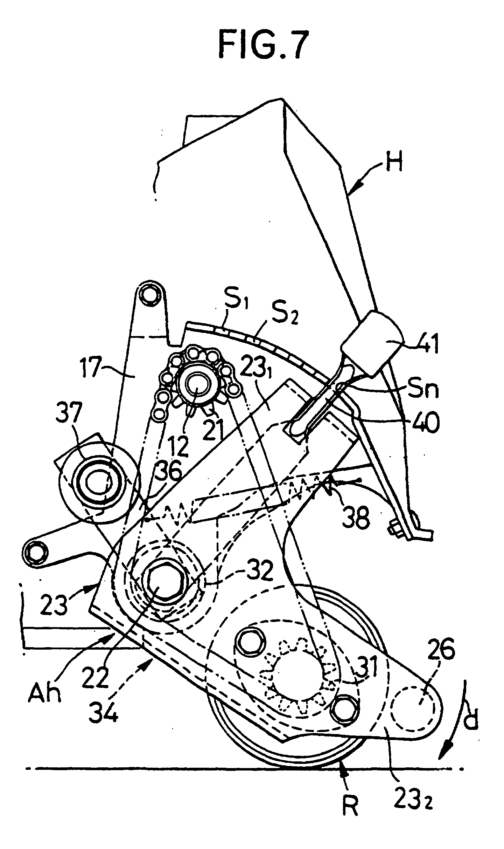

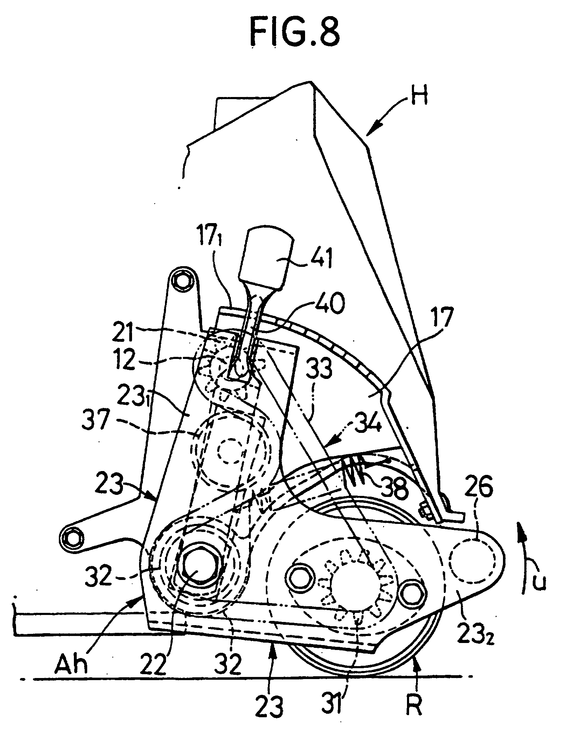

As shown in Fig.5, a height regulating shaft 22 is secured to one (a left sidewall surface in the advancing direction of the lawn mower) of sidewall surfaces of the cutter housing H substantially in parallel to the mission output shaft 12. The height regulating shaft 22 is extended outwards from the cutter housing H in the same direction, as is the transmission output shaft 12, and a height regulating arm 23 formed into a bell crank-like shape is vertically swingably supported at its intermediate portion on an outer end of the height regulating shaft 22, as shown in Figs.7 and 8. On the other hand, as shown in Fig.5, a support shaft 24 is secured to the other sidewall surface (at a right side in the advancing direction of the lawn mower) on the same axis L-L as the height regulating shaft 22, and a swingable arm 25 bent into a crank-like shape is vertically swingably supported on the support shaft 24. A lower arm portion 23₂ of the bell crank-like height regulating arm 23 and a lower end of the swingable arm 25 are integrally interconnected by a connecting rod 26, so that they are swung synchronously about the height regulating shaft 22. The rear roller R is rotatably supported between the lower arm portion 23₂ of the height regulating arm 23 and a lower end of the swingable arm 25 with ball bearings 27 and 28 interposed therebetween. The rear roller R is comprised of a roller shaft 30 secured in a penetrating manner in a central portion of a tightly-closed hollow roller body 29, as shown in Fig.5.

The lifting and lowering of the rear roller R can be regulated with respect to the cutter housing H by the vertically swinging movements of the height regulating arm 23 and the swingable arm 25, thereby regulating the height of the cutter C to regulate the lawn mowing height.

A driven sprocket 31 corresponding to the driving sprocket 21 is secured to one end of the roller shaft 30 of the rear roller R, and an idle roller 32 is rotatably supported on the height regulating shaft 22. An endless transmitting chain 33 is reeved around the driving sprocket 21, the driven sprocket 31 and the idle roller 32. The driving sprocket 21, the driven sprocket 31 and the transmitting chain 33 constitute a chain transmitting mechanism 34, so that an output from the transmission 8 is transmitted through the chain transmitting mechanism 34 to the rear roller R.

A tension roller 37 is disposed halfway between the driving sprocket 21 and the idle roller 32 outside the transmitting chain 33 and swingably supported on the height regulating shaft 22 with a tension arm 36 interposed therebetween. A tension spring 38 comprised of an extension spring is fastened at one end to an intermediate portion of the tension arm 36 and at the other end to a height regulating panel 17, so that the tension roller 37 can be brought into pressure contact with the transmitting chain 33 from the outside of the latter by a resilient force of the tension spring 38 to regulate the tension of the transmitting chain 33 to a constant level.

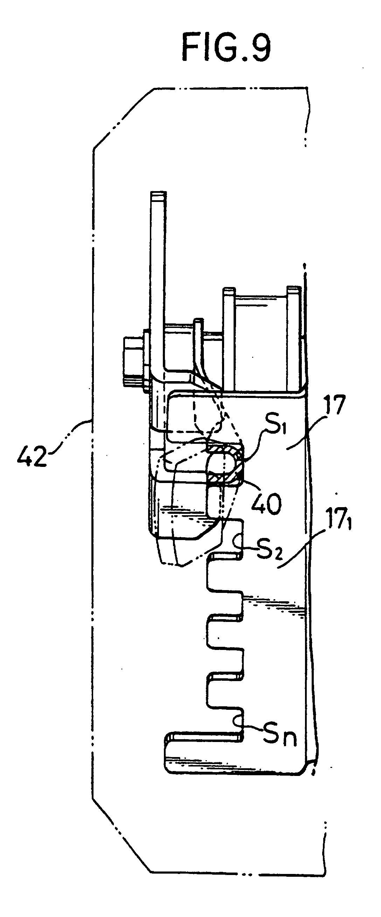

As clearly shown in Fig.5, a height regulating lever 40 formed of a resilient plate is secured to the height regulating shaft 22. The height regulating lever 40 extends upwards along an upper arm portion 23₁ of the height regulating arm 23, and a handle 41 is secured to an upper end of the height regulating lever 40. On the other hand, a handle locking portion 17₁ is integrally formed arcuately about the height regulating shaft 22 on an upper portion of height regulating panel 17, and a plurality of locking recesses S₁ - Sₙ are provided in a row in the handle locking portion 17₁, as clearly shown in Fig.9, so that the height regulating lever 40 can be selectively locked in one of the locking recesses S₁ - Sₙ. If the height regulating lever 40 is locked in the locking recess Sₙ, as shown in Fig.7, the lawn mower is regulated to a highest position, and if the height regulating lever 40 is locked in the locking recess S₁, as shown in Fig.8, the lawn mower is regulated to a lowest position.

The height regulating panel 17, the height regulating shaft 22, the height regulating arm 23 and the height regulating lever 40 constitute a height regulating mechanism Ah of the lawn mower.

In Figures, reference character 42 is a cover which is supported on the cutter housing H to cover the height regulating mechanism Ah.

The operation of this embodiment will be described below.

Now, if the engine E is started by turning ON the key switch K, or by operating a recoiled stator Z, the cutter C is rotated, and the transmission 8 having the cone clutch is driven through the belt transmitting mechanism 16. Further, the rear roller R is rotated through the chain transmitting mechanism 34, whereby the lawn mowing operation can be carried out by the cutter C, and the ground surface after being just subjected to the lawn-mowing can be rolled by the roller R.

The regulation of the lawn mowing height is achieved by the regulation of the longitudinally swinging movement of the height regulating lever 40. For example, if the height regulating lever 40 is swung to a rearmost position, as shown in Fig.7, the height regulating arm 23 is swung downwards (in a direction d in Fig.7) about the height regulating shaft 17 along with the rear roller R to lift the cutter housing H. If the height regulating lever 40 is then locked into the lowermost locking recess Sₙ, the cutter housing H is retained at the highest position. In this manner, the lawn mowing height of the cutter C can be regulated to a highest level. If the height regulating level 40 is swung to a foremost position, as shown in Fig.8, the height regulating arm 23 is swung upwards (in a direction u in Fig.8) about the height regulating shaft 17 along with the rear roller R to lift the cutter housing H. If the height regulating lever 40 is then locked into the uppermost locking recess S₁, the cutter housing H is retained at the lowest position. In this manner, the lawn mowing height of the cutter C can be regulated to a lowest level. Further, if the height regulating lever 40 is selectively locked into one of the middle locking recesses, the cutter housing H can be stepwise retained at the middle position.

Alternatively, the height regulating lever 40 may be constructed so that its swinging movement can be continuously regulated, whereby the lifting and lowering of the cutter housing H may be continuously regulated.

According to this embodiment, by the fact that the rear roller R is disposed below the transmission 8, the size and weight of the cutter housing H can be reduced more than those in the conventional system, leading to a considerably reduced manufacture cost of the cutter housing H. In addition, the distance between the axles of the front wheels Wf, Wf and the roller shaft 30 of the rear roller R, i.e., a wheel base is reduced more than that in the prior art, leading to a decreased turning radius of the lawn mower, so that the working machine is capable of a smaller sharp turn, thereby considerably increasing the lawn mowing area. For example, when lawn on a grand in a limited space, for example, in a soccer field, is mowed, a sleep ground area (i.e., an unmowed ground area) can be reduced and moreover, the load of pushing by the height regulating lever 40 can be reduced.

By the fact that the height regulating shaft 22 and the mission output shaft 12 of the transmission 8 are disposed at a distance, the degree of freedom in selecting the place for disposition of the transmission 8 can be increased.

Further, by the fact that the transmission 8 is disposed above the rear roller R, the own weight of the transmission 8 can be caused to act on the rear roller R, thereby increasing the driving force of the rear roller R.

Although the embodiment of the present invention has been described, it will be understood that the present invention is not limited to the above-described embodiment, and various modifications may be made within the scope of the appended claims. For example, the above-described embodiment has been described as being applied to the walking-type lawn mower, but the present invention is also applicable to another walking-type working machine. In addition, the rear roller may be used as a rear wheel. Further, the lifting and lowering of the rear roller are regulated at stages in the embodiment, but may be regulated continuously.

## Claims

1. A system for driving a walking-type working machine, comprising a prime mover (E) mounted on a cutter housing (H), so that a cutter (C) is driven by said prime mover (E), and a rear rolling member (R) is also driven by said prime mover (E) through a transmission (8),
**characterised in that** said transmission (8) is swingably supported on a rear portion of the cutter housing (H) through a transmission output shaft- (12) of said transmission (8), and said rear rolling member (R) is suspended below the transmission (8) for regulatable lifting and lowering movements, said transmission (8) having said transmission output shaft (12) operatively connected to the rear rolling member (R) through a transmitting mechanism (34) and said transmission (8) being biased by a support spring (19) about the transmission output shaft (12), thereby applying a tension to a transmitting belt (11) which transmits a driving force of said prime mover (E) to said transmission (8).

2. A system for driving a walking-type working machine according to claim 1, further including a height regulating shaft (22) provided on said cutter housing (H) at a distance spaced apart from said transmission (8), and a height regulating arm (23) swingably supported on said height regulating shaft (22), said rear rolling member (R) being rotatably carried on said height regulating arm (23), so that said rear rolling member (R) can be lifted and lowered by controlling the swinging movement of the height regulating arm (23).

3. A system for driving a walking-type working machine according to claim 2, wherein said transmission output shaft (12) of said transmission (8), said rear rolling member (R) and said height regulating shaft (22) are operatively connected to one another by a transmitting mechanism (34), and said system further includes a tensioner (37) mounted to an endless transmitting band (33) of the transmitting mechanism (34) for constantly applying a predetermined tension to said endless band.

4. A system for driving a walking-type working machine according to claim 1 or 2, wherein said transmission (8) has a transmission input shaft (9) depending below a tightly-closed transmission case (8₁) and operatively associated with said prime mover (E), said transmission input shaft (9) and said transmission case (8₁) are liquid-tightly sealed by a seal means.

5. A system for driving a walking-type working machine according to claim 1 or 2, wherein said rear rolling member (R) is a rear roller.

## Patentansprüche

1. System zum Antreiben einer Arbeitsmaschine vom Schiebetyp, umfassend eine Antriebsvorrichtung (E), welche derart an einem Gehäuse (H) einer Schneidevorrichtung angebracht ist, dass eine Schneidevorrichtung (C) von der Antriebsvorrichtung (E) angetrieben ist, und ein hinteres Rollenelement (R) ist ebenfalls von der Antriebsvorrichtung (E) durch ein Getriebe (8) angetrieben,
**dadurch gekennzeichnet, dass** das Getriebe (8) durch eine Getriebeausgangswelle (12) des Getriebes (8) schwenkbar an einem hinteren Teil des Gehäuses (H) der Antriebsvorrichtung gehalten ist und das hintere Rollenelement (R) zwecks regulierbarer Hebe- und Senkbewegungen unter dem Getriebe (8) angebracht ist, wobei die Getriebeausgangswelle (12) des Getriebes (8) durch einen Übertragungsmechanismus (34) betriebsmäßig mit dem hinteren Rollenelement (R) verbunden ist und wobei das Getriebe (8) durch eine Haltefeder (19) um die Getriebeausgangswelle (12) vorgespannt ist, wodurch eine Spannung auf einen Übertragungsriemen (11) ausgeübt wird, welcher eine Antriebskraft der Antriebsvorrichtung (E) auf das Getriebe (8) überträgt.

2. System zum Antreiben einer Arbeitsmaschine vom Schiebetyp nach Anspruch 1, welches darüber hinaus eine Höhenregulierungswelle (22) aufweist, die an dem Gehäuse (H) der Schneidevorrichtung in Abstand zum Getriebe (8) vorgesehen ist und welches einen schwenkbar an der Höhenregulierungswelle (22) gehaltenen Höhenregulierungsarm (23) aufweist, wobei das hintere Rollenelement (R) drehbar an dem Höhenregulierungsarm (23) getragen ist, so dass das hintere Rollenelement (R) durch Steuern der Schwenkbewegung des Höhenregulierungsarms (23) gehoben und gesenkt werden kann.

3. System zum Antreiben einer Arbeitsmaschine vom Schiebetyp nach Anspruch 2, wobei die Getriebeausgangswelle (12) des Getriebes (8), das hintere Rollenelement (R) und die Höhenregulierungswelle (22) durch einen Übertragungsmechanismus (34) betriebsmäßig miteinander verbunden sind und das System darüber hinaus einen Spanner (37) umfasst, der an einem Endlosübertragungsband (33) des Übertragunsmechanismus (34) angebracht ist, um eine vorbestimmte Spannung konstant auf das Endlosband auszuüben.

4. System zum Antreiben einer Arbeitsmaschine vom Schiebetyp nach Anspruch 1 oder 2, wobei das Getriebe (8) eine Getriebeeingangswelle (9) aufweist, welche von einem dicht verschlossenen Getriebegehäuse (8₁) nach unten heraussteht und betriebsmäßig mit der Antriebsvorrichtung (E) verbunden ist, wobei die Getriebeeingangswelle (9) und das Getriebegehäuse (8₁) durch ein Abdichtungsmittel wasserdicht abgedichtet sind.

5. System zum Antreiben einer Arbeitsmaschine vom Schiebetyp nach Anspruch 1 oder 2, wobei das hinter Rollenelement (R) eine hintere Rolle ist.

## Revendications

1. Système pour entraîner une machine opératoire de type ambulatoire, comprenant un moteur principal (E) monté sur un logement de coupoir (H), de sorte qu'un coupoir (C) est entraîné par ledit moteur principal (E), et un élément roulant arrière (R) est également entraîné par ledit moteur principal (E) par l'intermédiaire d'une transmission (8),
**caractérisé en ce que** ladite transmission (8) est supportée, pour pouvoir pivoter, sur une partie arrière du logement de coupoir (H) par l'intermédiaire d'un arbre de sortie de transmission (12) de ladite transmission (8), et ledit élément roulant arrière (R) est suspendu au-dessous de la transmission (8) pour permettre des mouvements de levage et d'abaissement pouvant être régulés, ladite transmission (8) ayant ledit arbre de sortie de transmission (12) qui est raccordé, en fonctionnement, à l'élément roulant arrière (R) par l'intermédiaire d'un mécanisme de transmission (34) et ladite transmission (8) étant sollicitée par un ressort de support (19) autour de l'arbre de sortie de transmission (12), appliquant, de la sorte, une tension à une courroie de transmission (11) qui transmet une force d'entraînement dudit moteur principal (E) à ladite transmission (8).

2. Système pour entraîner une machine opératoire de type ambulatoire selon la revendication 1, incluant, en outre, un arbre régulateur de hauteur (22) disposé sur ledit logement de coupoir (H), à une certaine distance à l'écart de ladite transmission (8), et un bras régulateur de hauteur (23) supporté, pour pouvoir pivoter, sur ledit arbre régulateur de hauteur (22), ledit élément roulant arrière (R) étant porté, pour pouvoir tourner, sur ledit bras régulateur de hauteur (23), de sorte que ledit élément roulant arrière (R) peut être levé et abaissé en commandant le mouvement de pivotement du bras régulateur de hauteur (23).

3. Système pour entraîner une machine opératoire de type ambulatoire selon la revendication 2, dans lequel ledit arbre de sortie de transmission (12) de ladite transmission (8), ledit élément roulant arrière (R) et ledit arbre régulateur de hauteur (22) sont raccordés les uns aux autres, en fonctionnement, par un mécanisme de transmission (34), et ledit système inclut, en outre, un tendeur (37) monté à une bande de transmission sans fin (33) du mécanisme de transmission (34) pour appliquer, de façon constante, une tension prédéterminée à ladite bande sans fin.

4. Système pour entraîner une machine opératoire de type ambulatoire selon la revendication 1 ou 2, dans lequel ladite transmission (8) comporte un arbre d'entrée de transmission (9) suspendu au-dessous d'un carter de transmission fermé de façon étanche (8₁) et associé, en fonctionnement, audit moteur principal (E), ledit arbre d'entrée de transmission (9) et ledit carter de transmission (8₁) sont scellés de façon étanche aux liquides par un moyen formant joint d'étanchéité.

5. Système pour entraîner une machine opératoire de type ambulatoire selon la revendication 1 ou 2, dans lequel ledit élément roulant arrière (R) est un rouleau arrière.
